(19) Europäisches Patentamt
European Patent Office
Office européen des brevets

(11) EP 2 884 568 A1

(12) # EUROPEAN PATENT APPLICATION

(43) Date of publication:
**17.06.2015 Bulletin 2015/25**

(21) Application number: **13197055.0**

(22) Date of filing: **13.12.2013**

(51) Int Cl.:
***H01M 4/36*** *(2006.01)*
***H01M 4/58*** *(2010.01)*
***H01M 4/62*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BASF SE**
**67056 Ludwigshafen (DE)**

(72) Inventors:
- **Ewald, Bastian**
  **55120 Mainz (DE)**
- **Bayer, Robert**
  **74889 Sinsheim (DE)**
- **Kridjus, Ivana**
  **67069 Ludwigshafen (DE)**
- **Lampert, Jordan Keith**
  **Cleveland, OH 4413 (US)**

(54) **Process for producing electrode materials**

(57) The present invention relates to a process for producing electrode materials in form of hollow spheres containing lithium iron phosphate and carbon via spray drying and to a process for producing electrodes from said electrode materials.

EP 2 884 568 A1

## Description

The present invention relates to a process for producing electrode materials containing lithium iron phosphate and carbon, which comprises the following steps:

(i) preparing a mixture M1 containing

(A) at least one phosphorus compound, which can be a separate phosphorus compound or can be at the same time the at least one lithium compound (B) or iron compound (C) or carbon source (D),
(B) at least one lithium compound which can be a separate lithium compound or can be at the same time the at least one phosphorous compound (A) or carbon source (D),
(C) at least one iron compound in which Fe is present in the +2 or +3 oxidation state which can be a separate iron compound or can be at the same time the at least one phosphorous compound (A) or carbon source (D),
(D) at least one carbon source, which can be a separate carbon source or can be at the same time at least one phosphorous compound (A) or lithium compound (B) or iron compound (C),
(E) optionally at least one reducing agent,
(F) optionally at least one further metal compound containing one or more metals different from Fe,
(G) at least one solvent,
wherein the concentration of the components (A), (B), (C), (D), (E) and (F) together is at least 15 wt.-%, based on the total weight of the mixture M1;
or
preparing a mixture M2 containing
(H) at least one $Life_{1-x}M_xPO_4$ wherein M is selected from Mn, Ni, Co, Mg, and mixtures thereof, wherein $0 \leq x \leq 0.05$, and which might be coated by a carbon source,
(I) at least one carbon source which can be a separate carbon source or at the same time be the $Life_{1-x}M_xPO_4$ (H) coated by a carbon source, and
(G) at least one solvent,

wherein the concentration of the components (H) and (I) together is at least 15 wt.-%, based on the total weight of the mixture M2;
(ii) spray drying the mixture M1 or M2 obtained in step (i) by means of at least one apparatus which employs at least one spray nozzle for spraying to obtain agglomerated particles, wherein the temperature outside the exit zone of the spray nozzle is larger than 175 °C; and
(iii) thermally treating the particles obtained in step (ii) at 400 to 1000°C.

The present invention further relates to electrode materials obtainable by this process, to their use for producing electrodes for electrochemical cells, to a process for producing electrodes for electrochemical cells and to electrochemical cells comprising said electrodes.
In the search for advantageous electrode materials for batteries which utilize lithium ions as conductive species, numerous materials, for example lithium-comprising spinels, mixed oxides having a sheet structure, for example lithiated nickel-manganese-cobalt oxides and lithium-iron phosphates, have hitherto been proposed.
Lithium-iron phosphates are of particular interest because they do not comprise any toxic heavy metals and in many cases are very resistant to oxidation and water. A disadvantage of lithium-iron phosphates could be the comparatively low energy density.
A problem is that it is frequently desirable for lithium-iron phosphates to be very finely divided in order to display suitable electrochemical properties. High dust pollution and poor rheological properties, which cause problems in production and processing, are frequently observed in the case of finely divided lithium-iron phosphates.
It is therefore an object of the invention to provide a process for producing electrode materials, which is simple, requires very few steps and provides access to chemically insensitive electrode materials having good rheological properties. A further object was to provide chemically insensitive electrode materials which can be produced with an ideally low outlay and do not cause a high level of dust pollution. A further object was to provide electrochemical cells which have, overall, advantageous use properties. Examples of use properties are the properties in processing to produce batteries or battery components and the properties of the batteries manufactured therefrom.
Accordingly, the process for producing electrode materials defined at the outset has been found, also referred to hereinafter as process according to the invention. The particular combination of different process parameters of the inventive process yields particles containing lithium iron phosphate and carbon in form of hollow spheres with a diameter of about 1 to 100 microns. These particles are easy to handle with reduced dust generation and show better rheological properties than smaller particles. These particles in form of hollow spheres are easily deposited on a current collector

and can then be easily converted into the fine particles desired by battery manufactures by application of mechanical stress like calendaring. The particles obtainable by the inventive process combine the desirable features of easy handling with low dust pollution, good rheological properties during processing and yielding electrodes containing fine dispersed electrochemically active electrode material.

To perform the process according to the invention, in stage (i), a mixture M1 (first alternative) or a mixture M2 (second alternative) is prepared. Two or more of the starting materials, preferably all starting materials involved, are mixed in several steps or preferably in one step. Suitable vessels for the mixing are, for example, stirred tanks and stirred flasks.

Step (i) or the inventive process is characterized further hereinafter.

According to the first alternative in step (i) a mixture M1 is prepared containing

(A) at least one phosphorus compound, which can be a separate phosphorus compound or can be at the same time the at least one lithium compound (B) or iron compound (C) or carbon source (D),
(B) at least one lithium compound which can be a separate lithium compound or can be at the same time the at least one phosphorous compound (A) or carbon source (D),
(C) at least one iron compound in which Fe is present in the +2 or +3 oxidation state which can be a separate iron compound or can be at the same time the at least one phosphorous compound (A) or carbon source (D),
(D) at least one carbon source, which can be a separate carbon source or can be at the same time at least one phosphorous compound (A) or lithium compound (B) or iron compound (C),
(E) optionally at least one reducing agent,
(F) optionally at least one further metal compound containing one or more metals different from Fe,
(G) at least one solvent,

wherein the concentration of the components (A), (B), (C), (D), (E) and (F) together is at least 15 wt.-%, based on the total weight of the mixture M1.

The starting material (A) selected is at least one phosphorus compound, also called phosphorus compound (A) hereinafter, which can be a separate phosphorus compound or can be at the same time the at least one lithium compound (B) or iron compound (C) or carbon source (D). The phosphorus compound (A) may be selected from phosphorus hydrides and compounds in which phosphorus is present in the +1 or +3 or +5 oxidation state, for example phosphines having at least one alkyl group or at least one alkoxy group per molecule, phosphorus halides, phosphonic acid, hypophosphorous acid and phosphoric acid. Preferred phosphines are those of the general formula (I)

$$P(R^1)_r(X^1)_sH_t \qquad (I)$$

where the variables are each selected as follows:

$R^1$ may be different or the same and is selected from phenyl and preferably $C_1$-$C_{10}$-alkyl, cyclic or linear, for example methyl, ethyl, n-propyl, isopropyl, n-butyl, isobutyl, sec-butyl, tert-butyl, n-pentyl, cyclopentyl, isoamyl, isopentyl, n-hexyl, isohexyl, cyclohexyl and 1,3-dimethylbutyl, preferably n-$C_1$-$C_6$-alkyl, more preferably methyl, ethyl, n-propyl, isopropyl, and most preferably methyl or ethyl. If a substance has two or more alkoxy groups per mole, $R^1$ may be different or preferably the same and may be selected from the aforementioned $C_1$-$C_6$-alkyl radicals.

$X^1$ may be different or the same and is selected from halogen, hydroxyl groups, phenoxy groups and alkoxy groups, preferably of the formula $OR^1$, especially methoxy and ethoxy, and where halogen is preferably bromine and more preferably chlorine,

r, s are selected from integers in the range from zero to three,

t is selected from integers in the range from zero to two,

where the sum of r + s + t = 3, and where
at least one of the inequations

$$r \neq 0$$

$$s \neq 0$$

is satisfied.

In one embodiment of the present invention, phosphorus compound (A) is selected from compounds of the general formula $P(OR^1)_3$, where $R^1$ may be different or preferably the same and may be selected from phenyl and $C_1$-$C_{10}$-alkyl, particular preference being given to $P(OCH_3)_3$ and $P(OC_2H_5)_3$.

In one embodiment of the present invention, phosphorus compound (A) is selected from compounds of the general formula $O=P(OR^1)_3$, where $R^1$ may be different or preferably the same and may be selected from phenyl and $C_1$-$C_{10}$-alkyl, particular preference being given to $O=P(OCH_3)_3$ and $O=P(OC_2H_5)_3$.

In one embodiment of the present invention, phosphorus compound (A) is selected from compounds of the general formula $O=P(R^1)_3$, where $R^1$ may be different or preferably the same and may be selected from phenyl and $C_1$-$C_{10}$-alkyl, particular preference being given to $O=P(C_6H_5)_3$, $O=P(CH_3)_3$ and $O=P(C_2H_5)_3$.

The phosphonic acid, hypophosphorous acid and phosphoric acid selected may in each case be the free acid or corresponding salts, especially lithium and ammonium salts. The phosphoric acid and phosphonic acid selected may in each case be the mononuclear acids $H_3PO_3$ and $H_3PO_4$, but additionally also di-, tri- or polynuclear acids, for example $H_4P_2O_7$ or polyphosphoric acid. In another variant, a compound of mixed condensation is selected, for example obtainable by condensation of phosphoric acid with phosphorous acid.

In one embodiment of the present invention, two or more phosphorus compounds (A) are selected as starting material (A). In another embodiment of the present invention, exactly one phosphorus compound (A) is selected.

Preferably the at least one phosphorous compound (A) is selected from phosphoric acids with P in oxidation state +1, +3, and +5 and salts and esters of the aforementioned acids.

The starting material (B) is at least one lithium compound, also called lithium compound (B), which can be a separate lithium compound or can be at the same time the at least one phosphorous compound (A) or carbon source (D). Preferably at least one lithium compound (B) is an inorganic lithium compound. Examples of suitable inorganic lithium compounds are lithium halides, for example lithium chloride, and also lithium sulfate, lithium acetate, LiOH, $Li_2CO_3$, $Li_2O$ and $LiNO_3$; preference is given to $Li_2SO_4$, LiOH, $Li_2CO_3$, $Li_2O$ and $LiNO_3$. Lithium compound may comprise water of crystallization, for example $LiOH \cdot H_2O$.

In a specific embodiment of the present invention, the phosphorus compound (A) and lithium compound (B) selected in each case is $LiH_2PO_2$, lithium phosphate, lithium orthophosphate, lithium metaphosphate, lithium phosphonate, lithium phosphite, lithium hydrogenphosphate or lithium dihydrogenphosphate, which means that lithium phosphate, lithium phosphonate, lithium phosphite or lithium (di)hydrogenphosphate can each serve simultaneously as the phosphorus compound (A) and as the lithium compound (B).

Preferred compounds selected as the at least one lithium compound (B) are selected from LiOH, $Li_2CO_3$, $Li_2O$, $LiNO_3$, $Li_2SO_4$, and lithium salts of phosphoric acids with P in oxidation state +1, +3, and +5.

The starting material (C) is at least one iron compound in which Fe is present in the +2 or +3 oxidation state which can be a separate iron compound or can be at the same time the at least one phosphorous compound (A) or carbon source (D). The starting material (C) is also called iron compound (C). The at least one iron compound (C) is preferably selected from inorganic iron compounds, for example iron oxides such as FeO, $Fe_2O_3$ or $Fe_3O_4$, iron hydroxides, for example $Fe(OH)_3$, FeOOH, also $FeCO_3$, water-comprising iron oxides, also described as FeO·aq or $Fe_2O_3$.aq, or water-soluble iron salts such as $FeSO_4$, $Fe_2(SO_4)_3$, ammonium iron(II) sulfate, ammonium iron(III) sulfate, iron acetate, iron phosphates like iron(II) phosphate ($Fe_3(PO_4)_2$), iron(III) phosphate ($FePO_4$), iron(II) pyrophosphate, iron(III) pyrophosphate, iron phosphonate, iron(II) citrate, iron(III) citrate, ammonium iron(II) citrate, ammonium iron(III) citrate, lithium iron citrate, iron(II) lactate, iron(III) lactate, iron(II) ethoxide, iron(II) gluconate, iron(II) oxalate, iron(III) acetylacetonate, also basic iron carbonate, iron(II) bromide, iron(III) bromide, iron(II) fluoride, iron(III) fluoride, iron(II) nitrate, iron(III) nitrate, and iron chloride, for example $FeCl_2$ and hydrous iron(III) chloride. For the purposes of the present invention, carboxylic acid salts of iron are considered to be inorganic iron compounds. Further suited iron compounds are FeS, iron carbide, and iron phosphide.

Preferred iron compounds (C) are selected from $Fe(OH)_3$, basic Fe(III) hydroxide, in particular FeOOH, $Fe_2O_3$, $Fe_3O_4$, iron(II) phosphate, iron (III) phosphate, iron phosphonates, iron carbonate, ammonium iron citrate, iron acetate, $FeSO_4$, iron citrate, iron lactate, iron chloride, and the respective hydrates.

In an embodiment of the present invention, at least two iron compounds of which at least one, preferably at least two, has/have Fe in the oxidation state +2 or +3 are selected as starting material (C).

In an embodiment of the present invention, at least three iron compounds which all have Fe in the oxidation state +2 or +3 are selected as starting material (C).

In another embodiment of the present invention, precisely one iron compound in which Fe is present in the oxidation state +2 or +3 is selected as starting material (C).

Starting material (C) can be used, for example, as aqueous solution, as aqueous suspension or as powder, for example having average particle diameters in the range from 10 to 750 nm, preferably in the range from 25 to 500 nm.

Starting material (D) is at least one carbon source, also called carbon source (D) for short, which can be a separate carbon source or can be at the same time at least one phosphorous compound (A) or lithium compound (B)

or iron compound (C).

A separate carbon source (D) shall be understood in the context of this invention to mean that a further starting material is used which is selected from elemental carbon in a polymorph which conducts the electrical current, or a compound which is decomposed to carbon in the course of the thermal treatment in step (iii) and which is different than phosphorus compound (A), lithium compound (B), and iron compound (C).

An example of a suitable separate carbon source (D) is carbon in a polymorph which conducts the electrical current, i.e., for example, carbon black, graphite, graphene, carbon nanotubes or activated carbon.

Examples of graphite are not only mineral and synthetic graphite, but also expanded graphites and intercalated graphite.

Carbon black can be selected, for example, from lamp black, furnace black, flame black, thermal black, acetylene black and industrial black. Carbon black may comprise impurities, for example hydrocarbons, especially aromatic hydrocarbons, or oxygen-containing compounds or oxygen-containing groups, for example OH groups. In addition, sulfur- or iron-containing impurities are possible in carbon black. In a further variant, modified carbon blacks or modified graphites are used, for example those carbon blacks or graphites which have hydroxyl groups, epoxy groups, keto groups or carboxyl groups.

Further suitable carbon sources (D) are compounds of carbon which are decomposed to carbon in the course of thermal treatment in step (iii). Suitable examples are synthetic and natural polymers, unmodified or modified. Examples of synthetic polymers are polyolefins, for example polyethylene and polypropylene, and also polyacrylonitrile, polybutadiene, polystyrene, and copolymers of at least two comonomers selected from ethylene, propylene, styrene, (meth)acrylonitrile and 1,3-butadiene. Also suitable are polyisoprene and polyacrylates. Particular preference is given to polyacrylonitrile.

Polyacrylonitrile is understood in the context of the present invention to mean not just polyacrylonitrile homopolymers but also copolymers of acrylonitrile with 1,3-butadiene or styrene. Preference is given to polyacrylonitrile homopolymers.

In the context of the present invention, polyethylene is understood to mean not just homopolyethylene but also copolymers of ethylene which comprise at least 50 mol% of ethylene in copolymerized form and up to 50 mol% of at least one further comonomer, for example α-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, $C_1$-$C_{10}$-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is understood to mean not just homopolypropylene but also copolymers of propylene which comprise at least 50 mol% of propylene in copolymerized form and up to 50 mol% of at least one further comonomer, for example ethylene and α-olefins such as butylene, 1-hexene, 1-octene, 1-decene, 1-dodecene and 1-pentene. Polypropylene is preferably isotactic or essentially isotactic polypropylene.

In the context of the present invention, polystyrene is understood to mean not just homopolymers of styrene but also copolymers with acrylonitrile, 1,3-butadiene, (meth)acrylic acid, $C_1$-$C_{10}$-alkyl esters of (meth)acrylic acid, divinylbenzene, especially 1,3-divinylbenzene, 1,2-diphenylethylene and α-methylstyrene.

A further suitable synthetic polymer is polyvinyl alcohol.

Natural polymers suitable as carbon sources (D) are, for example, carbohydrates like starch, cellulose, alginates (e.g. agar-agar), and also pectins, gum arabic, sugars, oligo- and polysaccharides, guar flour and carob flour, and also amylose and amylopectin.

Also suitable are modified natural polymers. These are understood to mean natural polymers modified by polymer-analogous reaction. Suitable polymer-analogous reactions are especially esterification and etherification. Preferred examples of modified natural polymers are methanol-etherified starch, acetylated starch and acetylcellulose, and also phosphated and sulfated starch.

Additionally suitable as carbon sources (D) are carbides, preferably covalent carbides, for example iron carbide $Fe_3C$.

Further suitable carbon sources (D) are nonvolatile, low molecular weight organic compounds. Especially suitable are those compounds which do not vaporize at temperatures in the range from 350 to 1200°C, but rather decompose, for example as solids or in the melt. Examples are dicarboxylic acids, for example phthalic acid, phthalic anhydride, isophthalic acid, terephthalic acid, tartaric acid, citric acid, pyruvic acid, and also sugars, for example monosaccharides having 3 to 7 carbon atoms per molecule (trioses, tetroses, pentoses, hexoses, heptoses) and condensates of monosaccharides, for example di-, tri- and oligosaccharides, especially lactose, glucose and fructose, and also sugar alcohols and sugar acids, for example aldonic acids, ketoaldonic acids, uronic acids and aldaric acids, especially galactonic acid.

Further examples of low molecular weight organic compounds as carbon source (D) are urea and the less volatile condensates thereof: biuret, melamine, melam (N2-(4,6-diamino-1,3,5-triazin-2-yl)-1,3,5-triazine-2,4,6-triamine)

and melem (1,3,4,6,7,9,9b-heptaazaphenalene-2,5,8-triamine).

Further examples of carbon sources (D) are salts, preferably iron salts, ammonium salts and alkali metal salts, more preferably iron, sodium, potassium, ammonium or lithium salts, of organic acids, for example alkanoates, especially acetates, propionates, butyrates, and also lactates, citrates, tartrates and benzoates. Particularly preferred examples are ammonium acetate, potassium ammonium tartrate, potassium hydrogen tartrate, potassium sodium tartrate, sodium tartrate (disodium tartrate), sodium hydrogen tartrate, lithium hydrogen tartrate, lithium ammonium tartrate, lithium tartrate, lithium citrate, potassium citrate, sodium citrate, iron acetate, lithium acetate, sodium acetate, potassium acetate, lithium lactate, ammonium lactate, sodium lactate and potassium lactate.

According to one embodiment of the present invention the at least one carbon source (D) comprises at least partly a separate carbon source selected from electrically conductive carbon, synthetic and natural carbon containing polymers, carbides, organic carboxylic acids, urea, urea derivatives, natural and synthetic polymers, and mixtures thereof.

In a specific embodiment of the present invention, the carbon source (D) and phosphorus compound (A) selected is an organic phosphorus compound, examples of which include trimethyl phosphate, triethyl phosphate, triphenylphosphine and triphenylphosphine oxide $(C_6H_5)_3PO$.

In a specific embodiment of the present compound, the carbon source (D) and lithium compound (B) selected is lithium acetate, lithium lactate or lithium hydrogen tartrate, i.e. lithium compound (B) lithium acetate, lithium lactate or lithium hydrogen tartrate can in each case serve simultaneously as the carbon source (D).

In a specific embodiment of the present invention, the carbon source (D) and iron compound (C) selected is an organic iron compound, examples of which include iron carbide and iron salts of organic acids like iron acetate, iron citrate, iron lactate etc. which are described as suited iron compounds (C).

In one embodiment of the present invention, two or more different carbon sources are selected, for example two different carbon sources or three different carbon sources. In another embodiment of the present invention, exactly one carbon source (D) is selected.

In a specific embodiment of the present invention, the carbon source (D) and iron compound (D) selected is iron acetate, iron citrate, iron gluconate, iron ethoxide or ammonium iron citrate, i.e. the iron compound (D1) iron(II) acetate, iron(II) acetylacetonate, iron(II) citrate, iron(II) lactate, iron(III) lactate, ammonium iron(II) citrate, iron(III) acetate, iron(III) acetylacetonate, iron(III) citrate or ammonium iron(III) citrate can serve simultaneously as the carbon source (C).

In a specific embodiment of the present invention, the carbon source (D) and iron compound (C) selected is iron carbide.

In a specific embodiment of the present invention, the iron compound (C), carbon source (D) and lithium compound (B) selected is lithium iron citrate, i.e. lithium iron citrate can serve simultaneously as the iron compound (C), carbon source (D) and lithium compound (B).

In one embodiment of the present invention, two phosphorus compounds (A), one lithium compound (B), two iron compounds (C), and one carbon source (D), are used.

In a preferred embodiment of the present invention, two phosphorus compounds (A), one lithium compound (B), two carbon sources (D), and one or two iron compounds (C) are used.

In a preferred embodiment of the present invention, two phosphorus compounds (A), one lithium compound (B), two carbon sources (D), and one iron compound (C) wherein the iron compound (C) being a salt of an organic compound and serving as one of the carbon sources (D).

In a preferred embodiment of the present invention, in step (i), one or more reducing agent (E) can be used. This embodiment is in particular preferred when at least one iron compound (C) in which Fe is present in the +3 oxidation state is used. Suitable compounds used as reducing agents are, for example, those phosphorus compounds (A) in which P is present in the +3 or +1 oxidation state, especially phosphorous acid ($H_3PO_3$), hypophosphorous acid ($H_2PO_2$) and the respective ammonium and lithium salts and esters thereof, for example $C_1$-$C_{10}$-alkyl esters. A further suitable reducing agent (E) is elemental iron.

The reducing agents (E) used may be gaseous, liquid or solid substances which convert iron, if required, to the +2 oxidation state under the conditions of step (a) or (b).

In one embodiment of the present invention, the solid reducing agent (E) selected is a metal, for example nickel or manganese, or a metal hydride.

The gaseous reducing agent (E) used may be, for example, hydrogen, carbon monoxide, ammonia and/or methane. If it is desirable to use one or more gaseous reducing agents (E), it is preferable to use the gaseous reducing agent(s) (E) in step (b), which is explained in detail below.

Further suitable reducing agents (E) are metallic iron and iron pentacarbonyl.

If a reducing agent (E) is present, its concentration is at least 0.1 wt.-%, based on the total weight of mixture M1.

In another embodiment of the present invention, no reducing agent (E) is used.

In one embodiment of the present invention, in step (i), the ratios of iron compound(s) (C), of phosphorus compound(s) (A) and lithium compound(s) (B) are selected such that the desired stoichiometry of an iron compound which is intended for use as an electrode material is satisfied. For instance, in step (a), the ratios of iron compound(s)

(C), of phosphorus compound(s) (A) lithium compound(s) (B), and optional further metal compound (F) can be selected such that the stoichiometry gives rise, for example, to $Li_3Fe_2(PO_4)_3$, $Li_2Fe_2(PO_4)_2$, $Li_4Fe(PO_4)_2$ or $Li_2FeP_2O_7$, or more particularly $Life_{1-x}M_xPO_4$ wherein M is selected from Mn, Ni, Co, Mg and mixtures thereof, wherein $0 \leq x \leq 0.05$.

Mixture M1 may further contain at least one further metal compound containing one or more metals different from Fe, also called metal compound (F) for short. The metal selected is preferably one or more metals from the first period of the transition metals. Preferred metal compound(s) (F) are selected from compounds of Ti, V, Cr, Mn, Co, Ni, Mg, Al, Nb, W, Mo, Cu and Zn, especially from compounds of Sc, Ti, V, Mn, Ni and Co. Very particular preference is given to selecting metal compound (F) from oxides, hydroxides, carbonates and sulfates of metals of the first period of the transition metals.

Metal compound (F) may be anhydrous or hydrous. Metal cation in metal compound (F) may be in complexed form, for example as a hydrate complex, or uncomplexed form.

Metal compound (F) may be a salt, for example halide, especially chloride, and also nitrate, carbonate, sulfate, oxide, hydroxide, acetate, citrate, tartrate, oxalate or acetylacetonate, or salts with different anions. Preference is given to selecting salts from oxides, carbonates, hydroxides and nitrates, in basic or neutral form. Very particularly preferred examples of metal compounds (F) are oxides, hydroxides, carbonates and sulfates.

In another embodiment of the present invention, metal compound (F) is selected from fluorides, for example as an alkali metal fluoride, especially sodium fluoride.

In one embodiment of the present invention, metal compound (F) can act as one or the only carbon source (C), examples of which include nickel acetate, cobalt acetate, zinc acetate and manganese(II) acetate.

In one embodiment of the present invention, metal compound (F) can act as one or the only reducing agent (E). Examples include manganese(II) acetate, $MnCO_3$, $MnSO_4$, nickel lactate, manganese hydride, nickel hydride, nickel suboxide, nickel carbide, manganese carbide and manganese(II) lactate.

If a metal compound (F) is present, its concentration is at least 0.1 wt.-%, based on the total weight of mixture M1.

According to the second alternative in step (i) a mixture M2 is prepared containing

(H) at least one $Life_{1-x}M_xPO_4$ wherein M is selected from Mn, Ni, Co, Mg, and mixtures thereof, wherein $0 \leq x \leq 0.05$, and which might be coated by a carbon source,

(I) at least one carbon source which can be a separate carbon source or at the same time be the $Life_{1-x}M_xPO_4$ (H) coated by a carbon source, and

(G) at least one solvent,

wherein the concentration of the components (H) and (I) together is at least 15 wt.-%, based on the total weight of the mixture M2.

Mixture M2 contains as component (H) at least one $Life_{1-x}M_xPO_4$ wherein M is selected from Mn, Ni, Co, Mg, and mixtures thereof, wherein $0 \leq x \leq 0.05$. The at least one $Life_{1-x}M_xPO_4$ is also called lithium iron compound (H). Preferred $Life_{1-x}M_xPO_4$ is $LiFePO_4$. The preparation of $LiFe_{1-x}M_xPO_4$ is known to the person skilled in the art.

The $Life_{1-x}M_xPO_4$ may be coated by a carbon source which is selected from elemental carbon in a polymorph which conducts the electrical current, or a compound which is decomposed to carbon in the course of the thermal treatment in step (iii). The carbon source used as coating may be selected from the carbon sources described for the carbon source (D) above.

It is possible to use only one lithium iron phosphate as lithium iron compound (H) or to use two or more different lithium iron compounds selected from $Life_{1-x}M_xPO_4$ which are optionally coated by a carbon source.

Mixture M2 further contains at least one carbon source which can be a separate carbon source or at the same time be the $Life_{1-x}M_xPO_4$ coated by a carbon source, also referred to as carbon source (I). If carbon source (I) comprises a separate carbon source it is selected from the compounds described for the carbon compound (D), preferred are electrically conductive carbon, synthetic and natural carbon containing polymers, carbides, organic carboxylic acids, urea, urea derivatives, natural and synthetic polymers, and mixtures thereof.

According to one embodiment of the present invention the at least one carbon source (I) comprises at least partly a separate carbon source selected from electrically conductive carbon, synthetic and natural carbon containing polymers, carbides, organic carboxylic acids, urea, urea derivatives, natural and synthetic polymers, and mixtures thereof. It is also possible to use a lithium iron compound (H) coated by a carbon source and additionally use a one or more separate carbon sources as carbon source (I).

Mixture M1 as well as mixture M2 further contains at least one or more solvent (G), called solvent (G) for short. Suited solvents are for example organic solvents, water and mixtures thereof. Organic solvents shall be understood to mean those substances which are liquid at the temperature of step (i) of the process according to the invention and which have at least one C-H bond per molecule. Examples of suitable organic solvents are especially halogen-free organic solvents such as methanol, ethanol, isopropanol or n-hexane, cyclohexane, acetone, ethyl acetate, diethyl ether and diisopropyl ether. Preferably water or a mixture of water and one or more organic solvent is used as solvent (G),

more preferred the solvent (G) consists essentially of water. It is particularly preferred to use water as solvent (G) in step (i), but no organic solvent.

According to a preferred embodiment of the invention mixture M1 or M2 of step (i) contains at least 1 wt.-% of at least one separate carbon source (D) or (I), respectively, based on the total weight of mixture M1 or M2.

Without any intention to give preference to a particular theory, it is possible that certain organic solvents (G) such as secondary or primary alkanols can also act as reducing agents (E) in the mixture M1.

The mixing in step (i) can be conducted, for example, stirring one or more suspensions of the starting materials (A) to (D), (G), and optionally (E) and (F) for preparing mixture M1 or the starting materials (G) to (I) for preparing mixture M2.

In one embodiment of the present invention, the mixing in step (i) is performed at temperatures in the range from zero to 200°C, preference being given to conducting it at temperatures in the range from room temperature up to 110°C, more preferably to 80°C.

In one embodiment of the present invention, the mixing in step (i) is conducted at standard pressure. In other embodiments, the mixing is conducted at elevated pressure, for example at 1.1 up to 20 bar. In other embodiments, the mixing in step (i) is conducted at reduced pressure, for example at 10 mbar up to 990 mbar.

The mixing in step (i) can be conducted over a period in the range from one minute up to 12 hours, preferably 15 minutes to 4 hours, more preferably 20 minutes to 2 hours.

In one embodiment of the present invention, the mixing in step (i) is conducted in one stage.

In another embodiment, the mixing in step (i) is conducted in two or more stages. For example, it is possible first to dissolve or to suspend iron compound (C) and lithium compound (B) together in solvent (G), then to mix them with phosphorus compound (A) and carbon source (D), and then optionally to mix them with reducing agent (E) and/or further metal compound (F) or first to suspend the lithium iron compound (H) in solvent (G) and then to mix them with a separate carbon source used as carbon source (I).

In one embodiment, solvent (G) is first initially charged, followed by successive addition of lithium compound (B), iron compound (C), phosphorus or phosphorus compound (A), carbon source (D), and optionally reducing agent (E) and/or further metal compound (F); or followed by successive addition of lithium iron compound (H) and carbon source (I).

The concentration of the components (A), (B), (C), (D), (E) and (F) together in mixture M1 is at least 15 wt.-%, based on the total weight of the mixture M1, preferably the concentration of the components (A), (B), (C), (D), (E) and (F) together is at least 17 wt.-%, more preferred at least 20 wt.-% and especially preferred 25 wt.-%.

The concentration of the components (H) and (I) together in mixture M2 is at least 15 wt.-%, based on the total weight of the mixture M2, preferably the concentration of the components (H) and (I) together is at least 17 wt.-%, more preferred at least 20 wt.-% and especially preferred 25 wt.-%.

Step (i) yields mixture M1 or a mixture M2 as a suspension or as a solution. The content of solvent (G) in mixtures M1 and M2, respectively, is usually at least 10 wt.-%, preferably at least 20 wt.-% and more preferred at least 30 wt.-%, based on the weight of the total weight of the mixture.

In step (ii) of the present process the mixture M1 or M2 obtained in step (i) is spray dried by means of at least one apparatus which employs at least one spray nozzle for spraying to obtain agglomerated particles. The spray drying can be conducted in a spray dryer. Suitable spray dryers are drying towers, for example drying towers with one or more atomization nozzles, and spray dryers with an integrated fluidized bed.

Particularly preferred nozzles are two-phase nozzles, i.e. nozzles wherein substances of different states of matter are mixed vigorously by means of separate feeds in the interior thereof or at the openings thereof. Further examples of suitable nozzles are combined nozzles, for example combinations of two-phase and pressure nozzles.

During the spray drying the mixture M1 or M2, respectively, obtained in step (a) is forced through one or more nozzles into a hot gas stream. The hot gas stream may be a hot air stream, a hot inert gas stream or hot burner offgas stream. According to the present process the temperature outside the exit zone of the spray nozzle, where the mixture M1/M2 comes into contact with the hot gas stream, is larger than 175°C, preferred the temperature outside the exit zone of the spray nozzle is above 200°C, more preferred above 240°C, and most preferred above 300°C. Usually the temperature outside the exit zone of the spray nozzle is below 550°C and more preferred below 500°C.

The exit temperature at the end of the drying zone is at least 100°C preferably at least 120°C, even more preferred at least 145°C.

In one embodiment of the present invention, the hot air stream or the hot inert gas stream or the hot burner offgases flow in the direction with the mixture introduced from step (i) (cocurrent process). In another embodiment of the present invention, the hot air stream or hot inert gas stream the hot burner offgases flow in the opposite direction to the mixture introduced from step (i) (countercurrent process). The spray device is preferably in the upper part of the spray dryer, especially of the spray tower.

Dry material obtained can be separated from the hot air stream or hot inert gas stream or from the hot burner offgases after the actual spray drying by means of a separator, for example a cyclone. In another embodiment, dry

material obtained is separated from the hot air stream or hot inert gas stream or from the hot burner offgases by means of one or more filters after the actual spray drying.

The spray drying can be performed batchwise or else continuously.

As a result of the present process least a portion of the agglomerated particles obtained in the spray drying step (ii) are obtained in form of hollow spheres.

The main feature of the spray drying a solvent containing mixture is the transformation of the bulk mixture having a comparably small surface into very fine droplets having a high surface. Due to the increased surface of the mixture the solvent contained therein evaporates much easier and much faster than from the bulk. Usually the parameters of the drying process, e.g. composition of the mixture to be dried and the temperature of the drying gas stream are selected to enable a homogeneous drying, wherein the droplets shrink during the evaporation of the solvent and compact solid particles are obtained, as displayed schematically in Figure 1a.

In contrast to this usual procedure the parameters of the present process are selected to induce inhomogeneous drying of the droplet. Inhomogeneous spray drying as used herein means that at the beginning of the spray drying process a rapid solidification of the outside of the droplet is induced and a shell of solid material is formed while part of the solvent containing mixture is remaining inside the droplet. During the advance of the drying process the solvent still being inside the shell diffuses through the shell of solid material and finally a hollow sphere is formed as displayed schematically in Figure 1 b. This inhomogeneous drying of the droplets during the spray drying step is induced by the comparably high solid content of mixtures M1 and M2 and the high temperatures used in the spray drying step according to the present process. In respect to "high solid content" the term "solid" means all components present in the mixtures M1/M2 which are not to be removed during the spray drying, and includes components which are present in the mixtures M1/M2 in the solid state and components which are present in the liquid state, for example solved salts.

According to the present invention the term "hollow spheres" is intended to mean particles having an outer shell of solid material of essentially spherical form and an inner hollow portion, wherein the outer shell may contain holes and the inner hollow portion may contain smaller particles formed during the spray drying. Examples of such particles are shown in Figure 1c. The term "essentially spherical" means, that deviations from the ideal spherical form may be present which may e.g. occur due to roughness of the surface of the particles or from small deformation of the spherical form into ellipsoidal form occurring during the spray drying.

The agglomerated particles obtained have outer particle diameters in the range of from 1 to 100 μm, preferred in the range of from 1 to 50 μm. The inner diameter of the hollow particles, i.e. the diameter of hollow part of the particles is at least 25 % of the outer diameter of the hollow particles, preferably at least 50 %, more preferred at least 80 %, and most preferred at least 90 % of the outer diameter of the hollow particles. Usually the wall thickness of the particles in form of hollow spheres is below 3 μm. The outer diameter, the inner diameter and the wall thickness of the hollow particles may be determined by electron microscopy like SEM and TEM.

In step (iii) of the process according to the invention, the agglomerated particles obtained from step (ii) are treated thermally at temperatures in the range of from 400 to 1000°C, preferably 400 to 900°C.

In one embodiment of the present invention, the thermal treatment in step (iii) is conducted in a temperature profile with two to five and preferably with three or four zones, in which case each zone of the temperature profile preferably has a higher temperature than the preceding zone. For example, a temperature in the range from 400 to 550°C can be established in a first zone, and in the range from 450 to 750°C in a second zone, the temperature being higher than in the first zone. If introduction of a third zone is desired, thermal treatment can be effected at 700 to 1000°C in the third zone, but in any case at a temperature higher than in the second zone. The zones can be produced, for example, by the establishment of particular heating zones.

If batchwise performance of step (iii) is desired, it is possible to establish a temperature profile against time, which means that treatment is effected, for example, first at 400 to 550°C, then at 450 to 750°C, the temperature being higher than in the first phase. If introduction of a third phase is desired, thermal treatment can be effected at 700 to 1000°C in the third phase, but in any case at a temperature higher than in the second phase.

The thermal treatment in step (iii) can be performed, for example, in a rotary tube furnace, a push-through furnace or RHK (roller hearth kiln), a pendulum reactor, a muffle furnace, a calcination furnace or a quartz sphere furnace.

The thermal treatment in step (iii) can be performed, for example, in a weakly oxidizing atmosphere, preferably in inert or reducing atmosphere. "Weakly oxidizing" in the context of the present invention is understood to mean an oxygen-containing nitrogen atmosphere comprising up to 2% by volume of oxygen, preferably up to 1 % by volume. Examples of inert atmospheres are a noble gas atmosphere, especially argon atmosphere, and nitrogen atmosphere. Examples of a reducing atmosphere are nitrogen or noble gases which comprise 0.1 to 10% by volume of carbon monoxide, ammonia, hydrogen or hydrocarbon, especially methane. Further examples of a reducing atmosphere are air or nitrogen- or carbon dioxide-enriched air, in each case comprising more mol% of carbon monoxide, hydrogen or hydrocarbon than oxygen.

Preferably the thermal treatment in step (iii) is performed in an atmosphere containing less than 2 vol.-% oxygen, more preferred less than 1 vol.-% oxygen.

In one embodiment of the present invention, step (iii) can be performed over a period in the range from 1 minute up to 24 hours, preferably in the range from 10 minutes to 3 hours.

The particles obtained by the above described process contain agglomerated primary particles of lithiated iron phosphate with olivine structure of the stoichiometric formula $Life_{1-x}M_xPO_4$ wherein M is selected from Mn, Ni, Co, Mg and mixtures thereof, wherein $0 \leq x \leq 0.05$. Furthermore, the particles contain carbon in an electrically conductive polymorph. Preferably the particles contain 80 to 99.9 wt.-% $Life_{1-x}M_xPO_4$ with olivine structure and 0.1 to 20 wt.-% carbon, based on the total weight of the agglomerated particles.

The agglomerated particles obtainable by the process as described above are suitable as electrode materials and can be processed very efficiently. For example, they can be processed to pastes with good rheological properties; such pastes have a relatively low viscosity and can be processed without any great dust nuisance. The particles obtainable by the process described above are electrode materials with very good rate capability, i.e. very good capacity coupled with high discharge rate. One aspect of the present invention are therefore electrode materials in the form of agglomerated particles as described above which are obtainable by the process as described above.

In a further aspect the present invention provides the use of these electrode materials for producing electrodes for electrochemical cells. In another aspect the present invention provides electrodes comprising the particles obtainable by the process described above as electrode materials and electrochemical cells comprising said electrodes.

The lithium iron phosphate particles obtainable by the above described process are in particular valuable starting material for the following process for producing an electrode for electrochemical cells comprising the steps

(I) providing a slurry containing an electrode material in form of agglomerated particles obtainable according to the process comprising steps (i) to (iii) as described above, a solvent or solvent mixture, and optionally further components,
(II) coating the slurry onto a current collector,
(III) drying the coated current collector, and
(IV) calendering the dried coated current collector.

In step (I) of the process for producing an electrode for electrochemical cells a slurry is provided containing electrode material in form of lithium iron phosphate particles obtainable according to the process as described above, a solvent or solvent mixture, and optionally further components. Slurry means a suspension of the lithium iron phosphate particles in a liquid solvent. The slurry may be paste-like or a fluid slurry.

Preferred solvent systems contain water or N-methyl pyrrolidon (NMP), in particular preferred the solvent is selected from water and NMP is used.

The slurry may contain further components like additional carbon in an electrically conductive polymorph and binder.

The carbon is added to enhance electric conductivity of the electrode and may be selected from carbon black, graphite, graphene, carbon nanotubes, expanded graphites, intercalated graphites or activated carbon.

Graphene is understood in the context of the present invention to mean almost ideally or ideally two-dimensional hexagonal carbon crystals of analogous structure to individual graphite layers. They may have a thickness of one carbon atom layer or of only a few, for example 2 to 5, carbon atom layers. Graphene can be produced by exfoliation or by delamination of graphite.

Intercalated graphites are understood in the context of the present invention to mean incompletely delaminated graphites which comprise other atoms, ions or compounds intercalated between the hexagonal carbon atom layers. Examples of possible intercalations include alkali metal ions, $SO_3$, nitrate or acetate. The preparation of intercalated graphites (also: expandable graphites) is known; see, for example, Rüdorff, Z. anorg. Allg. Chem. 1938, 238(1), 1. Intercalated graphites can be produced, for example, by thermal expansion of graphite.

Expanded graphites can be obtained, for example, by expansion of intercalated graphites; see, for example, McAllister et al. Chem. Mater. 2007, 19, 4396-4404.

Suitable binders are preferably selected from organic (co)polymers. Suitable (co)polymers, i.e. homopolymers or copolymers, can be selected, for example, from (co)polymers obtainable by anionic, catalytic or free-radical (co)polymerization. The (co)polymers may be crosslinked or uncrosslinked. Suited binders are halogenated (co)polymers, especially fluorinated (co)polymers like for example polyvinyl chloride or polyvinylidene chloride, especially fluorinated (co)polymers such as polyvinyl fluoride and especially polyvinylidene fluoride, and polytetrafluoroethylene, polyethylene, polypropylene, polyisoprene, polyacrylates, polyacrylonitrile, polybutadiene, polystyrene polyacrylonitrile, polybutadiene, polyethylene oxide (PEO), cellulose, carboxymethylcellulose, polyimides and polyvinyl alcohol.

In step (II) the slurry provided in step (I) is coated onto a current collector. The current collector may be a metal wire, a metal grid, a metal web, a metal sheet, a metal foil or a metal plate or a polymer film. For example the current collector may be a metal foil like aluminum or copper foil, especially an aluminum foil, or a polymer film like a polyester film, which may be untreated or siliconized. The current collector may be coated on one or both sides with inventive

electrode material. Methods for coating the slurry on the current collector are known by the skilled person. For example, the slurry may be coated by means of a doctor blade.

In step (III) the coated current collector is dried to remove the solvent used for preparation of the slurry.

After drying in step (III) the dried coated electrode is calendered in step (IV). Calendering is usually performed by passing the electrode under rollers wherein a force is applied to the electrode thereby leveling, smoothing and compacting the coating and in particular crushing the particles present as hollow spheres into fine particles.

From this process the advantages of the present invention are particularly well visible. Initially large particles of the electrode material, i.e. of the later electroactive material, are produced which are easily processible due to better rheological properties and less dust generation in comparison to material in form of fine powders. After application of the particles on the current collector the large particles are transferred into the small fine particles desired in the electrode for good accessability of the electroactive material in the electrode.

The inventive electrodes preferably comprise:

a total in the range from 60 to 98% by weight, preferably 70 to 96% by weight, of the lithium iron phosphate electrode material obtainable by the process comprising steps (i) to (iii) as described above,
in the range from 1 to 25% by weight, preferably 2 to 20% by weight, of carbon,
in the range from 1 to 20% by weight, preferably 2 to 15% by weight, of binder.

The inventive electrodes preferably have a thickness of from 25 to 200 $\mu$m, preferably of from 30 to 100 $\mu$m, based on the whole thickness of the electrode without the thickness of the current collector.

The geometry of inventive electrodes can be selected within wide limits. It is preferable to configure inventive electrodes in thin films, for example in films with a thickness in the range from 10 $\mu$m to 250 $\mu$m, preferably 20 to 130 $\mu$m.

A preferred embodiment of the present invention is a process for producing electrodes containing lithium iron phosphate and carbon comprising the preparation of agglomerated particles according to steps (i) to (iii) of the process as described above followed by the preparation of electrodes from the agglomerated particles obtained in step (iii) according to steps (I) to (IV) as described above.

In a further aspect the present invention provides the use of the electrodes obtainable by the obtainable by the process comprising steps (I) to (IV) described above for electrochemical cells and to electrochemical cells comprising at least one electrode obtainable by the process comprising steps (I) to (IV) described above.

Preferably the inventive electrochemical cells are lithium ion batteries.

Inventive electrodes in inventive electrochemical cells serve by definition as cathodes. Inventive electrochemical cells comprise a counterelectrode, which is defined in the context of the present invention as the anode and which may be, for example, a carbon anode, especially a graphite anode, a lithium anode, a silicon anode or a lithium titanate anode.

The inventive electrochemical cells may, for example, be batteries or accumulators.

Inventive electrochemical cells may, as well as anode and inventive electrode, comprise further constituents, for example conductive salt, nonaqueous solvent, separator, output conductor, for example composed of a metal or an alloy, and also cable connections and housing.

In one embodiment of the present invention, inventive electrical cells comprise at least one nonaqueous solvent which may be liquid or solid at room temperature, preferably selected from polymers, cyclic and noncyclic ethers, cyclic and noncyclic acetals and cyclic and noncyclic organic carbonates.

Examples of suitable polymers are especially polyalkylene glycols, preferably poly-$C_1$-$C_4$-alkylene glycols and especially polyethylene glycols. These polyethylene glycols may comprise up to 20 mol% of one or more $C_1$-$C_4$-alkylene glycols in copolymerized form. The polyalkylene glycols are preferably polyalkylene glycols double-capped by methyl or ethyl.

The molecular weight $M_w$ of suitable polyalkylene glycols and especially of suitable polyethylene glycols may be at least 400 g/mol.

The molecular weight $M_w$ of suitable polyalkylene glycols and especially of suitable polyethylene glycols may be up to 5 000 000 g/mol, preferably up to 2 000 000 g/mol.

Examples of suitable noncyclic ethers are, for example, diisopropyl ether, di-n-butyl ether, 1,2-dimethoxyethane, 1,2-diethoxyethane, preference being given to 1,2-dimethoxyethane.

Examples of suitable cyclic ethers are tetrahydrofuran and 1,4-dioxane.

Examples of suitable noncyclic acetals are, for example, dimethoxymethane, diethoxymethane, 1,1-dimethoxyethane and 1,1-diethoxyethane.

Examples of suitable cyclic acetals are 1,3-dioxane and especially 1,3-dioxolane.

Examples of suitable noncyclic organic carbonates are dimethyl carbonate, ethyl methyl carbonate and diethyl carbonate.

Examples of suitable cyclic organic carbonates are compounds of the general formulae (II) and (III)

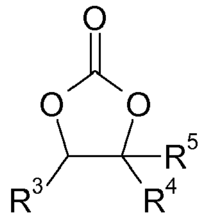

(II)

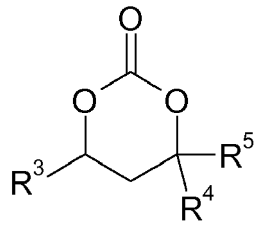

(III)

in which $R^3$, $R^4$ and $R^5$ may be the same or different and are selected from hydrogen and $C_1$-$C_4$-alkyl, for example methyl, ethyl, n-propyl, isopropyl, n-butyl, isobutyl, sec-butyl and tert-butyl, where $R^4$ and $R^5$ are preferably not both tert-butyl.

In particularly preferred embodiments, $R^3$ is methyl and $R^4$ and $R^5$ are each hydrogen, or $R^5$, $R^3$ and $R^4$ are each hydrogen.

Another preferred cyclic organic carbonate is vinylene carbonate, formula (IV).

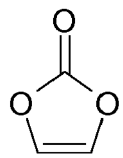

(IV)

The solvent(s) is (are) preferably used in what is known as the anhydrous state, i.e. with a water content in the range from 1 ppm to 0.1 % by weight, determinable, for example, by Karl Fischer titration.

Inventive electrochemical cells further comprise at least one conductive salt. Suitable conductive salts are especially lithium salts. Examples of suitable lithium salts are $LiPF_6$, $LiBF_4$, $LiClO_4$, $LiAsF_6$, $LiCF_3SO_3$, $LiC(C_nF_{2n+1}SO_2)_3$, lithium imides such as $LiN(C_nF_{2n+1}SO_2)_2$, where n is an integer in the range from 1 to 20, $LiN(SO_2F)_2$, $Li_2SiF_6$, $LiSbF_6$, $LiAlCl_4$, and salts of the general formula $(C_nF_{2n+1}SO_2)_mYLi$, where m is defined as follows:

m = 1 when Y is selected from oxygen and sulfur,
m = 2 when Y is selected from nitrogen and phosphorus, and
m = 3 when Y is selected from carbon and silicon.

Preferred conductive salts are selected from $LiC(CF_3SO_2)_3$, $LiN(CF_3SO_2)_2$, $LiPF_6$, $LiBF_4$, $LiClO_4$, and particular preference is given to $LiPF_6$ and $LiN(CF_3SO_2)_2$.

In one embodiment of the present invention, inventive electrochemical cells comprise one or more separators by which the electrodes are mechanically separated. Suitable separators are polymer films, especially porous polymer films, which are unreactive toward metallic lithium. Particularly suitable materials for separators are polyolefins, especially porous polyethylene in film form and porous polypropylene in film form.

Separators made from polyolefin, especially made from polyethylene or polypropylene, may have a porosity in the range from 35 to 45%. Suitable pore diameters are, for example, in the range from 30 to 500 nm.

In another embodiment of the present invention, it is possible to select separators from PET nonwovens filled with inorganic particles. Such separators may have a porosity in the range from 40 to 55%. Suitable pore diameters are, for example, in the range from 80 to 750 nm.

Inventive electrochemical cells further comprise a housing which may have any desired shape, for example cuboidal or the shape of a cylindrical sheet. In one variant, the housing used is a metal foil elaborated as a pouch.

Inventive electrochemical cells can be combined with one another, for example in series connection or in parallel connection. Series connection is preferred.

The present invention further provides for the use of inventive electrochemical cells in devices, especially in mobile devices. Examples of mobile devices are vehicles, for example automobiles, bicycles, aircraft, or water vehicles

such as boats or ships. Other examples of mobile devices are those which are moved manually, for example computers, especially laptops, telephones, or power tools, for example from the building sector, especially drills, battery-powered combination drills or battery-powered tackers.

A further aspect of the present invention is lithium ion batteries comprising at least one electrode comprising at least one inventive electrode material. A further aspect of the present invention is accordingly lithium ion batteries comprising at least one inventive electrode.

A further aspect of the present invention is the use of inventive lithium ion batteries in drills, battery-powered combination drills or battery-powered tackers, or in batteries for cold starting of motor vehicles, for example automobiles or motorbikes. Inventive lithium ion batteries have a high peak power and can be discharged rapidly if desired, for example within 6 minutes at 10°C.

The invention is illustrated by examples.

A) Hydrothermal preparation of lithium iron phosphate

$$LiOH + FeOOH + H_3PO_4 \text{ --> } LiFePO_4 + 2.5\ H_2O$$

Suspension A: 14.66 g (98%, 0.6 mol, Merck) LiOH are dissolved under stirring in 1000 mL of water. 69 g (85%, 0.6 mol, Bernd Kraft GmbH Duisburg, Germany) $H_3PO_4$ are added to this solution. A white precipitate occurs having a pH of 6.5. Subsequently 64.1 g Bayoxid EF300 (FeOOH, Fe-content 51.3%, 0.6 mol, BET 290 $m^2/g$) are added. Afterwards 320 mL $H_2O$ is added and a pH value of 2.84 is obtained.

Suspension A is filtrated and the solid obtained is washed with 1000 mL demineralized water in 5 portions. Conductivity is 29 μS. The solid is dried at 80 °C overnight in a drying furnace until has reached a constant weight.

B) Hydrothermal preparation of lithium iron phosphate coated by carbon ("C-LFP")

A suspension A as described under A) is prepared.

A suspension B is prepared by adding 3 g carbon black (Timcal Super P Li, Timcal Deutschland GmbH, D-40212 Düsseldorf, Germany) are added to water, wherein the carbon black swims on the surface. Subsequently, 150 ml aqueous $H_2O_2$-solution (30%, Merck GmbH, D-64293 Darmstadt, Germany) are added drop wise under stirring, wherein the carbon black disperses in water.

The black, aqueous carbon black dispersion B obtained is added under stirring to the suspension A. The reaction is conducted in a 3.5 l autoclave. The pressure in the autoclave is set to 10 bar with nitrogen. The stirrer is switched on with 700 rpm. The reaction mixture is stirred at room temperature for one hour and is then heated to 270 °C. The temperature is held at 270 °C for 12 hours and is then lowered to room temperature. The suspension obtained has a pH of 5.48 and a conductivity of 2.4 mS. The reaction mixture is filtrated and the solid obtained is washed with 1000 mL demineralized water in 5 portions. Conductivity is 29 μS. The solid is dried at 80 °C overnight in a drying furnace until has reached a constant weight.

Example 1 (Hollow sphere $LiFePO_4$ with 4 wt.-% carbon from non-agglomerated $LiFePO_4$, and glucose)

$LiFePO_4$ without any carbon component is obtained hydrothermally as described under A).

6l water are placed in a 10-l-glass reactor which is heatable from the outside at 90°C. Under stirring 2100 g are dispersed in these 6l water to give a homogeneous dispersion according to a solid concentration of 25 wt.-%. 210 g glucose (D-(+)-Glucose, anhydrous, 99%, Alfa Aesar) are dissolved in this solution under vigorous stirring. The dispersion is subsenquently stirred at 40°C for 30 minutes. A slightly yellow coloured, aqueous dispersion is obtained. The solution is subsequently spray-dried in a spray-dryer (type Minor MM, Niro, Denmark) under nitrogen (inlet temperature = 330°C, outlet temperature = 130°C). The yellowish spray-powder is obtained therefrom that shows an X-ray pattern of $LiFePO_4$ in the X-ray powder diffraction pattern (triphylite, syn - $LiFePO_4$). The powder shows spherical hollow agglomerates of $LiFePO_4$ primary particles interlinked with an organic glucose based film.

50 g of the so-obtained spray-powder are heated under constant N2 flow (10l) during one hour to an end temperature T = 720°C in a continuously rotating (7 rpm) 1-l-spherical quartz glass in a laboratory rotary furnace (BASF), held at this temperature T for one hour and is subsequently cooled under streaming $N_2$ to room temperature. A black powder is obtained that shows an X-ray pattern of $LiFePO_4$ in the X-ray powder diffraction pattern (triphylite, syn - $LiFePO_4$). The obtained black powder shows spherical agglomerated particles when investigated by means of SEM images. The combustion analysis of the product proves a carbon content of 3.9%

Example 2 (Hollow sphere $LiFePO_4$ with -4 wt.-% carbon from non-agglomerated $LiFePO_4$, and starch)

$LiFePO_4$ without any carbon component is obtained hydrothermally as described under A).

6l water are placed in a 10-l-glass reactor which is heatable from the outside at 90°C and equipped with a reflux cooler. 210 g starch (Acros Organics, 419695000, Starch, Potato (powder)) are dissolved under vigorous stirring in the 6l of water at 25°C. The dispersion is subsequently heated to 90°C to give a transparent solution. Under continued stirring 2100 g $LiFePO_4$ are then dispersed in this solution to give a homogeneous dispersion according to a solid concentration of 25%. The dispersion is subsenquently stirred at 90°C for 30 minutes. A slightly yellow coloured, aqueous dispersion is obtained. The solution is subsequently spray-dried in a spray-dryer (type Minor MM, Niro, Denmark) under nitrogen (inlet temperature = 330°C, outlet temperature = 130°C). The yellowish spray-powder is obtained therefrom that shows an X-ray pattern of $LiFePO_4$ in the X-ray powder diffraction pattern (triphylite, syn - $LiFePO_4$). The powder shows spherical hollow agglomerates of $LiFePO_4$ primary particles interlinked with an organic starch based film.

50 g of the so-obtained spray-powder are heated under constant N2 flow (10l/min) during one hour to an end temperature T = 720°C in a continuously rotating (7 rpm) 1-l-spherical quartz glass in a laboratory rotary furnace (BASF), held at this temperature T for one hour and is subsequently cooled under streaming $N_2$ to room temperature. A black powder is obtained that shows an X-ray pattern of $LiFePO_4$ in the X-ray powder diffraction pattern (triphylite, syn - $LiFePO_4$). The obtained black powder shows spherical agglomerated particles when investigated by means of SEM images. The combustion analysis of the product proves a carbon content of 4.2%

Example 3 (Hollow sphere $LiFePO_4$ with ~4 wt.-% carbon from non-agglomerated -carbon coated $LiFePO_4$ ("C-LFP"), and glucose)

$LiFePO_4$ with carbon component is obtained hydrothermally as described under B).

61 water are placed in a 10-l-glass reactor which is heatable from the outside at 90°C. Under stirring 2100 g C-LFP are dispersed in these 61 water to give a homogeneous dispersion according to a solid concentration of 25 wt.-%. 100 g glucose (D-(+)-Glucose, anhydrous, 99%, Alfa Aesar) are dissolved in this solution under vigorous stirring. The dispersion is subsenquently stirred at 40°C for 30 minutes. A slightly greyish coloured, aqueous dispersion is obtained. The solution is subsequently spray-dried in a spray-dryer (type Minor MM, Niro, Denmark) under nitrogen (inlet temperature = 330°C, outlet temperature = 130°C). The greyish spray-powder is obtained therefrom that shows an X-ray pattern of $LiFePO_4$ in the X-ray powder diffraction pattern (triphylite, syn - $LiFePO_4$). In SEM images the powder shows spherical hollow agglomerates of $LiFePO_4$ primary particles interlinked with an organic glucose based film.

50 g of the so-obtained spray-powder are heated under constant N2 flow (10l/min) during one hour to an end temperature T = 720°C in a continuously rotating (7 rpm) 1-l-spherical quartz glass in a laboratory rotary furnace (BASF), held at this temperature T for one hour and is subsequently cooled under streaming $N_2$ to room temperature. A black powder is obtained that shows an X-ray pattern of $LiFePO_4$ in the X-ray powder diffraction pattern (triphylite, syn - $LiFePO_4$). The obtained black powder shows hollow spherical agglomerates particles when investigated by means of SEM images. The combustion analysis of the product proves a carbon content of 4%

Comparative Example 1 (Non-Hollow sphere $LiFePO_4$ with ~4 wt.-% carbon from non-agglomerated $LiFePO_4$, and glucose)

$LiFePO_4$ with carbon component is obtained hydrothermally as described under B).

6l water are placed in a 10-l-glass reactor which is heatable from the outside at 90°C. Under stirring 600 g are dispersed in these 6l water to give a homogeneous dispersion according to a solid concentration of 10 wt.-%. 60g glucose (D-(+)-Glucose, anhydrous, 99%, Alfa Aesar) are dissolved in this solution under vigorous stirring. The dispersion is subsenquently stirred at 40°C for 30 minutes. A slightly yellow coloured, aqueous dispersion is obtained. The solution is subsequently spray-dried in a spray-dryer (type Minor MM, Niro, Denmark) under nitrogen (inlet temperature = 330°C, outlet temperature = 130°C). The yellowish spray-powder is obtained therefrom that shows an X-ray pattern of $LiFePO_4$ in the X-ray powder diffraction pattern (triphylite, syn - $LiFePO_4$). The powder shows spherical hollow agglomerates of $LiFePO_4$ primary particles interlinked with an organic glucose based film.

50 g of the so-obtained spray-powder are heated under constant N2 flow (10l/min) during one hour to an end temperature T = 720°C in a continuously rotating (7 rpm) 1-l-spherical quartz glass in a laboratory rotary furnace (BASF), held at this temperature T for one hour and is subsequently cooled under streaming $N_2$ to room temperature. A black powder is obtained that shows an X-ray pattern of $LiFePO_4$ in the X-ray powder diffraction pattern (triphylite, syn - $LiFePO_4$). The obtained black powder shows spherical agglomerates but no hollow spheres particles when investigated by means of SEM images. The combustion analysis of the product proves a carbon content of 4.1 %

## Claims

1. Process for producing electrode materials containing lithium iron phosphate and carbon comprising the steps:

   (i) preparing a mixture M1 containing

   (A) at least one phosphorus compound, which can be a separate phosphorus compound or can be at the same time the at least one lithium compound (B) or iron compound (C) or carbon source (D),
   (B) at least one lithium compound which can be a separate lithium compound or can be at the same time the at least one phosphorous compound (A) or carbon source (D),
   (C) at least one iron compound in which Fe is present in the +2 or +3 oxidation state which can be a separate iron compound or can be at the same time the at least one phosphorous compound (A) or carbon source (D),
   (D) at least one carbon source, which can be a separate carbon source or can be at the same time at least one phosphorous compound (A) or lithium compound (B) or iron compound (C),
   (E) optionally at least one reducing agent,
   (F) optionally at least one further metal compound containing one or more metals different from Fe,
   (G) at least one solvent,
   wherein the concentration of the components (A), (B), (C), (D), (E) and (F) together is at least 15 wt.-%, based on the total weight of the mixture M1;
   or
   preparing a mixture M2 containing
   (H) at least one $LiFe_{1-x}M_xPO_4$ wherein M is selected from Mn, Ni, Co, Mg, and mixtures thereof, wherein $0 \leq x \leq 0.05$ and which might be coated by a carbon source,
   (I) at least one carbon source which can be a separate carbon source or at the same time be the $LiFe_{1-x}M_xPO_4$ (H) coated by a carbon source, and
   (G) at least one solvent,
   wherein the concentration of the components (H) and (I) together is at least 15 wt.-%, based on the total weight of the mixture M2;

   (ii) spray drying the mixture M1 or M2 obtained in step (i) by means of at least one apparatus which employs at least one spray nozzle for spraying to obtain agglomerated particles, wherein the temperature outside the exit zone of the spray nozzle is larger than 175 °C; and
   (iii) thermally treating the particles obtained in step (ii) at 400 to 1000°C.

2. Process according to claim 1, wherein the at least one solvent (G) is water or a mixture of water and one or more organic solvent.

3. Process according to claim 1 or 2, wherein the concentration of the components (A), (B), (C), (D), (E) and (F) in M1 or the concentration of the components (H) and (I) in M2, respectively together is at least 17 wt.-%, based on the total weight of the respective mixture.

4. Process according to any of claims 1 to 3, wherein the temperature at the exit zone of the spray nozzle is at least 200 °C.

5. Process according to any of claims 1 to 4, wherein the at last one carbon source (D) or (I), respectively comprises at least partly a separate carbon source selected from electrically conductive carbon, synthetic and natural carbon containing polymers, carbides, organic carboxylic acids, urea, urea derivatives, natural and synthetic polymers, and mixtures thereof.

6. Process according to any of claims 1 to 5, wherein the mixture M1 or M2 of step (i) contains at least 1 wt.-% of at least one separate carbon source (D) or (I), respectively, based on the total weight of mixture M1 or M2.

7. Process according to any of claims 1 to 6, wherein the at least one phosphorous compound (A) is selected from phosphoric acids with P in oxidation state +1, +3, and +5 and salts and esters of the aforementioned acids.

8. Process according to any of claims 1 to 7, wherein the at least one lithium compound (B) is selected from LiOH, $Li_2CO_3$, $Li_2O$, $LiNO_3$, $Li_2SO_4$, and lithium salts of phosphoric acids with P in oxidation state +1, +3, and +5.

9. Process according to any of claims 1 to 8, wherein the at least one iron compound (C) is selected from $Fe(OH)_3$,

basic Fe(III) hydroxide, $Fe_2O_3$, $Fe_3O_4$, iron(II) phosphate, iron (III) phosphate, iron phosphonates, iron carbonate, ammonium iron citrate, iron acetate, $FeSO_4$, iron citrate, iron lactate, iron chloride, and the respective hydrates.

**10.** Electrode materials in the form of particles obtainable according to a process according to any of claims 1 to 9.

**11.** Electrode materials according to claim 10, wherein at least a portion of the particles are present in the form of hollow spheres.

**12.** Electrode materials according to claim 10, wherein the hollow spheres have outer diameters of from 1 microns up to 100 microns.

**13.** Electrode materials according to claim 11, wherein the inner diameter of the hollow spheres is at least 25% of the outer diameter of the hollow spheres.

**14.** Electrode materials according to any of claims 10 to 12, wherein the particles contain primary particles of lithiated iron phosphate with olivine structure of the stoichiometric formula $LiFe_{1-x}M_xPO_4$ wherein M is selected from Mn, Ni, Co, Mg and mixtures thereof, wherein $0 \leq x \leq 0.05$.

**15.** Use of electrode materials according to any of claims 10 to 14 for producing electrodes for electrochemical cells.

**16.** An electrode for electrochemical cells comprising at least one electrode material according to any of claims 10 to 14.

**17.** An electrochemical cell comprising at least one electrode according to claim 16,

**18.** Process for producing an electrode for electrochemical cells comprising the steps

(I) providing a slurry containing an electrode material according to any of claims 10 to 14, a solvent or solvent mixture, and optionally further components,
(II) coating the slurry onto a current collector,
(III) drying the coated current collector, and
(IV) calendering the dried coated current collector.

**19.** An electrochemical cell comprising at least one electrode obtainable according to the process of claim 18.

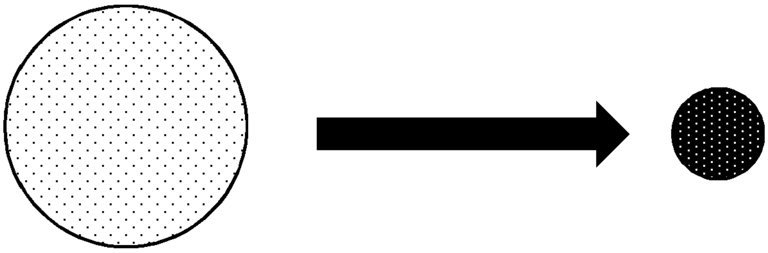

Figure 1a

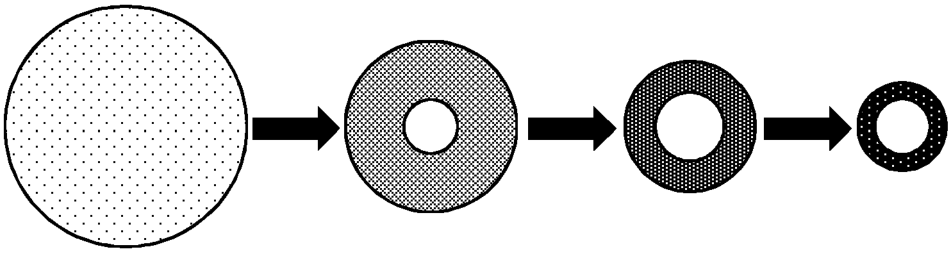

Figure 1b

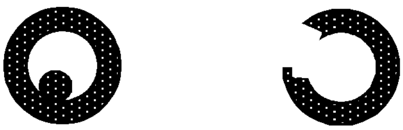

Figure 1c

Europäisches Patentamt
European Patent Office
Office européen des brevets

# EUROPEAN SEARCH REPORT

Application Number
EP 13 19 7055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2010/279117 A1 (GU TAO [US]) 4 November 2010 (2010-11-04)<br>* see in particular paragraphs 0003-0011, 0025,0056 and 0069. see also examples 1-3; see in particular claims 13, step (d). * | 1-19<br>1-19 | INV.<br>H01M4/36<br>H01M4/58<br>H01M4/62 |
| X<br>Y | WO 2009/127672 A1 (BASF SE [DE]; HIBST HARTMUT [DE]; ROBERTS BRIAN [US]; LAMPERT JORDAN K) 22 October 2009 (2009-10-22)<br>* see in particular claim 6 and page 12, lines 18-25; see also examples 1-18. * | 1-19<br>1-19 | |
| X<br>Y | US 2013/216902 A1 (CHOY SANG HOON [KR] ET AL) 22 August 2013 (2013-08-22)<br>* see in particular paragraphs 0033 to 0039, 0040, 0050, 0091-0093 * | 1-19<br>1-19 | |
| X<br>Y | US 2012/064408 A1 (SONG HYUN-KON [KR] ET AL) 15 March 2012 (2012-03-15)<br>* see in particular figures 2, 5 and claims 1-12 and claims 28 * | 10-19<br>10-19 | TECHNICAL FIELDS SEARCHED (IPC)<br>H01M |

The present search report has been drawn up for all claims

4

| Place of search | Date of completion of the search | Examiner |
|---|---|---|
| Munich | 4 September 2014 | Rumbo, Angel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 19 7055

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2014

| Patent document cited in search report | Publication date | Patent family member(s) | Publication date |
|---|---|---|---|
| US 2010279117 A1 | 04-11-2010 | CN 102422467 A | 18-04-2012 |
| | | US 2010279117 A1 | 04-11-2010 |
| | | WO 2010129417 A1 | 11-11-2010 |
| WO 2009127672 A1 | 22-10-2009 | CA 2721204 A1 | 22-10-2009 |
| | | CN 102066242 A | 18-05-2011 |
| | | EP 2282971 A1 | 16-02-2011 |
| | | JP 2011517653 A | 16-06-2011 |
| | | KR 20110025743 A | 11-03-2011 |
| | | TW 200951066 A | 16-12-2009 |
| | | US 2011037032 A1 | 17-02-2011 |
| | | WO 2009127672 A1 | 22-10-2009 |
| US 2013216902 A1 | 22-08-2013 | CN 102893432 A | 23-01-2013 |
| | | EP 2562857 A2 | 27-02-2013 |
| | | JP 2013525975 A | 20-06-2013 |
| | | KR 20110117619 A | 27-10-2011 |
| | | US 2013216902 A1 | 22-08-2013 |
| | | WO 2011132931 A2 | 27-10-2011 |
| US 2012064408 A1 | 15-03-2012 | KR 20120026822 A | 20-03-2012 |
| | | US 2012064408 A1 | 15-03-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **RÜDORFF.** *Z. anorg. Allg. Chem.,* 1938, vol. 238 (1), 1
- **MCALLISTER et al.** *Chem. Mater.,* 2007, vol. 19, 4396-4404